# FASCICULE DE BREVET EUROPEEN

(11) **EP 1 695 402 B1**
(45) Date de publication et mention de la délivrance du brevet: **10.12.2008**
(21) Numéro de dépôt: 04805612.1
(22) Date de dépôt: 02.12.2004
(51) Int. Cl.: H01M 4/86, H01M 8/08

(54) **PILE A COMBUSTIBLE ALCALINE INSENSIBLE A LA CARBONATATION**
VON KARBONATISIEUNG UNBEEINTRÄCHTIGTE ALKALISCHE BRENNSTOFFZELLE
ALKALINE FUEL CELL UNAFFECTED BY CARBONATION

(30) Priorité: 16.12.2003 FR 0314730
(43) Date de publication de la demande: 30.08.2006
(73) Titulaire: COMMISSARIAT A L'ENERGIE ATOMIQUE, 75752 Paris (FR)
(72) Inventeur: MARSACQ, Didier, F-38000 Grenoble (FR); ROUX, Christel, F-38210 Saint-Quentin-Sur-Isère (FR); PERRIN, Max, F-38120 Le Fontanil Cornillon (FR); BRUNEA, John, A., B-1180 Uccle (BE)
(74) Mandataire: Jouvray, Marie-Andrée
(86) Numéro de dépôt international: PCT/FR2004/003092
(87) Numéro de publication internationale: WO 2005/069413

(56) Documents cités:
- WO-A-03/017396
- HERMAN H ET AL: "The radiation-grafting of vinylbenzyl chloride onto poly(hexafluoropropylene-co-tetrafluoroeth ylene) films with subsequent conversion to alkaline anion-exchange membranes: optimisation of the experimental conditions and characterisation" JOURNAL OF MEMBRANE SCIENCE, ELSEVIER SCIENTIFIC PUBL.COMPANY. AMSTERDAM, NL, vol. 218, no. 1-2, 1 juillet 2003 (2003-07-01), pages 147-163, XP004434452 ISSN: 0376-7388
- AGEL E ET AL: "Utilisation d'electrolyte solide polymere dans les piles a combustibles alcalines" ANNALES DE CHIMIE, MASSON, PARIS, FR, vol. 26, no. 4, juillet 2001 (2001-07), pages 59-68, XP004341614 ISSN: 0151-9107 & AGEL E ET AL: "Characterization and use of anionic membranes for alkaline fuel cells" JOURNAL OF POWER SOURCES, ELSEVIER SEQUOIA S.A. LAUSANNE, CH, vol. 101, no. 2, 15 octobre 2001 (2001-10-15), pages 267-274, XP004318374 ISSN: 0378-7753 cité dans la demande

## Description

### Domaine technique de l'invention

L'invention concerne une pile à combustible alcaline comprenant un empilement solide constitué d'une première électrode, d'une membrane solide conductrice d'ions hydroxydes et d'une seconde électrode, chaque électrode comportant une couche active en contact avec la membrane solide.

### État de la technique

Les piles à combustible alcalines connues, aussi appelées AFC ("Alkaline Fuel Cell"), sont généralement constituées de deux électrodes et d'un électrolyte échangeur d'ions hydroxydes, le plus souvent sous forme liquide. Elles sont particulièrement intéressantes car elles présentent un certain nombre d'avantages par rapport aux piles à combustible échangeuses de protons également appelées piles de type PEMFC ("Proton Exchanged Membrane Fuel Cell"). Ainsi, la cinétique de réduction de l'oxygène est plus élevée pour des piles de type AFC que pour des piles de type PEMFC et, contrairement aux piles de type PEMFC, il est possible d'utiliser des catalyseurs en matériau non-noble pour les électrodes d'une pile de type AFC. De plus, l'électrolyte liquide alcalin est un meilleur conducteur ionique que les membranes échangeuses de protons et les piles de type AFC présentent des densités d'énergie volumique et massique accessible plus élevées que les piles de type PEMFC.

Cependant, en fonctionnant avec de l'air, les performances des piles de type AFC sont généralement réduites par un phénomène de carbonatation de l'électrolyte liquide dû au dioxyde de carbone (CO₂) présent dans l'air. En effet, lors du fonctionnement de la pile de type AFC, du CO₂ se dissout dans l'électrolyte liquide alcalin, ce qui entraîne la formation et la précipitation de carbonate de potassium. Ce phénomène entraîne une réduction de la valeur de pH de l'électrolyte alcalin, une diminution de la cinétique des réactions électrochimiques au niveau des électrodes et une altération des performances des électrodes. De plus, les piles de type AFC à électrolyte liquide nécessitent généralement un système de gestion de l'électrolyte liquide corrosif qui peut s'avérer être complexe et encombrant. Il est, enfin, très difficile d'employer des combustibles liquides avec les piles de type AFC car de tels combustibles ont tendance à diffuser à travers l'électrolyte liquide.

Pour remédier à ces inconvénients majeurs, il a été proposé d'exploiter l'affinité de certaines membranes polymères pour les liquides alcalins telles que la potasse ou la soude, de manière à constituer un gel alcalin solide destiné à remplacer l'électrolyte liquide des piles de type AFC. La présence d'une phase liquide au sein de ce gel favorise, en effet, la formation de zones de point triple. On entend par zone de point triple, une zone dans la pile à combustible alcaline permettant, à la fois, une conduction électronique, une conduction ionique et une réaction catalytique. Ainsi, Z. Ogumi et al. dans l'article "Preliminary Study on Direct Alcohol Fuel Cells Employing Anion Exchange Membrane" (Electrochemistry, Technical Paper, N°12, pages 980 à 983, 2002) proposent d'utiliser, dans une pile à combustible alcaline fonctionnant avec de l'alcool, une membrane échangeuse d'ions hydroxydes composée d'une chaîne de structure polyoléfine sur laquelle sont liés des groupes "ammonium quaternaire". La membrane échangeuse d'ions hydroxydes est imprégnée d'un électrolyte liquide comportant de l'éthylène glycol et du méthanol dissous dans une solution aqueuse comportant 1 mol.dm⁻³ de potasse de manière à former des zones de point triple au niveau des électrodes constituées par du carbone et du platine. La présence d'un électrolyte sous forme liquide induit, cependant, un phénomène de carbonatation.

E. Agel et al. ont tenté, dans l'article "Characterization and use of anionic membranes for alkaline fuel cells" (Journal of Power Sources, 101 (2001) 267-274), d'utiliser des membranes conductrices anioniques polymères sans ajout d'un électrolyte liquide alcalin. La conduction ionique est obtenue par réticulation du polymère à l'aide d'un agent de quaternisation. Cependant, malgré la bonne stabilité chimique et thermique d'une telle membrane, elle présente une faible conduction ionique sans ajout d'un électrolyte liquide alcalin. Il est, alors, nécessaire d'ajouter un liquide alcalin aux interfaces entre les électrodes et la membrane pour favoriser l'apparition de zones de point triple, le liquide alcalin impliquant alors un phénomène de carbonatation dans la pile à combustible alcaline, ce qui diminue alors les performances de ladite pile. Ainsi, dans l'article « Utilisation d'électrolyte solide polymère dans les piles à combustibles alcalines » (Ann. Chim. Sci. Mat, 2001, 26(4), pp 59-68), E. Agel et al. proposent un type de membranes échangeuses d'anions de type poly-électrolyte, préparée en greffant des amines quaternaires sur un polymère d'épichlorhydrine, puis consolidée par une étape de réticulation.

### Objet de l'invention

L'invention a pour but de réaliser une pile à combustible alcaline insensible au phénomène de carbonatation lors d'un fonctionnement avec de l'air, tout en présentant de bonnes performances et, plus particulièrement, une conduction ionique élevée.

Selon l'invention, ce but est atteint par le fait que le matériau constituant la couche active de chaque électrode comporte au moins un élément catalytique, un élément conducteur électronique et un élément conducteur d'ions hydroxydes, l'élément conducteur d'ions hydroxydes étant un polymère à motif vinylaromatique comportant une fonction ammonium quaternaire et des contre-ions hydroxydes OH⁻ étant associés aux ammoniums quaternaires du polymère.

Plus particulièrement, l'élément conducteur d'ions hydroxydes est un polymère à motif styrénique et des contre-ions hyroxydes OH⁻ sont associés aux ammoniums quaternaires du polymère.

Selon un développement de l'invention, l'élément conducteur d'ions hydroxydes est un polymère ayant la formule générale (I) suivante : 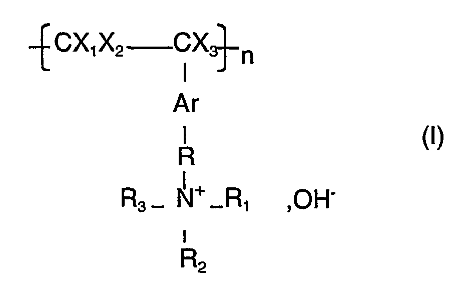 dans laquelle :
- X₁ et X₂ sont chacun choisis parmi le groupe comportant l'hydrogène, le chlore et le fluor,
- X₃ est choisi parmi le groupe comportant l'hydrogène, le chlore, le fluor, un alkyle et un alkyle perfluoré,
- Ar représente un cycle aromatique carboné, éventuellement substitué,
- R est choisi parmi -CH₂- et -(CF₂)ₙ₁-CH₂-, avec n1 compris entre 1 et 10, le groupement alkyle -CH₂- de R étant relié par une liaison covalente simple à l'azote de l'ammonium quaternaire,
- R₁, R₂ et R₃ sont respectivement des groupements alkyles, aryles ou alkyles-aryles, identiques ou distincts,
- et n est un nombre entier.

Selon un autre développement de l'invention, l'élément conducteur d'ions hydroxydes est un polymère de formule générale (II) suivante : 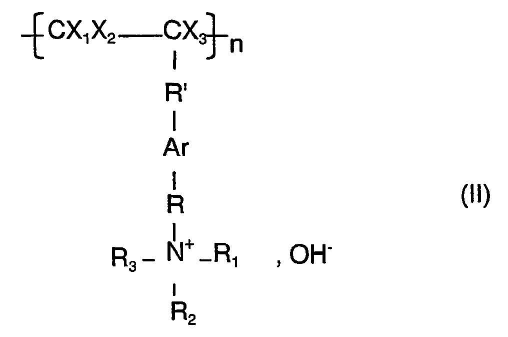 dans laquelle :
- X₁ et X₂ sont chacun choisis parmi le groupe comportant l'hydrogène, le chlore et le fluor,
- X₃ est choisi parmi le groupe comportant l'hydrogène, le chlore, le fluor, un alkyle et un alkyle perfluoré,
- Ar représente un cycle aromatique carboné, éventuellement substitué,
- R est choisi parmi -CH₂- ou-(CF₂)ₙ₁-CH₂- avec n1 compris entre 1 et 10, le groupement alkyle -CH₂- étant relié par une liaison covalente simple à l'azote de l'ammonium quaternaire,
- R' est choisi parmi le groupe comprenant l'oxygène, le groupement -O-CF₂, et -(CF₂)ₙ₂- avec n2 compris entre 1 et 10,
- R₁, R₂ et R₃ sont respectivement des groupements alkyles, aryles ou alkyles-aryles, identiques ou distincts;
- n est un nombre entier.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
Les figures 1 et 2 représentent respectivement des vues schématiques en coupe de premier et second modes de réalisation d'une pile à combustible alcaline selon l'invention.
Les figures 3 et 4 représentent le comportement électrochimique d'une pile à combustible alcaline à électrolyte liquide selon l'art antérieur, respectivement lors de sa mise en route et après 48 heures de fonctionnement.
La figure 5 représente l'évolution du comportement électrochimique d'une pile à combustible alcaline selon l'invention dans le temps.

### Description de modes particuliers de réalisation.

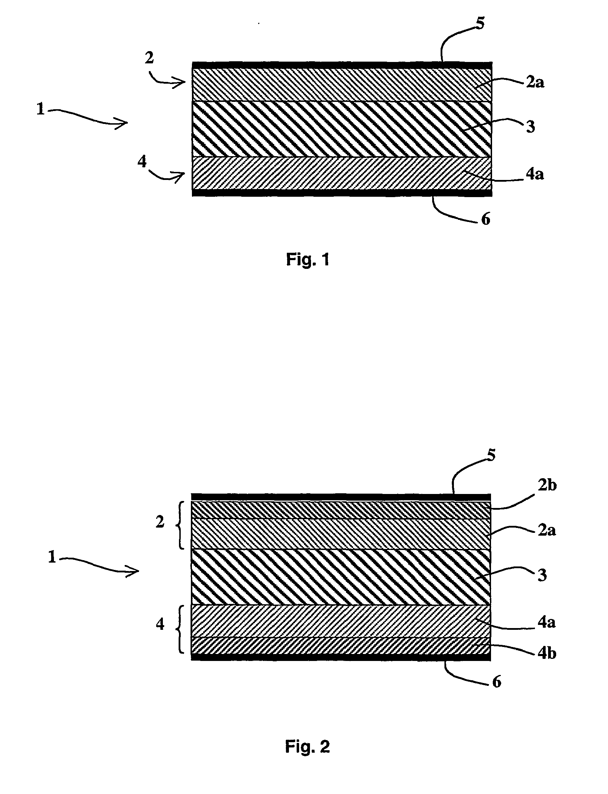

Comme représentée à la figure 1, une pile à combustible alcaline 1 selon l'invention comprend au moins un empilement solide constitué d'une première électrode 2, d'une membrane solide 3 conductrice d'ions hydroxydes et d'une seconde électrode 4, des premier et second collecteurs de courant 5 et 6 étant respectivement disposés sur les première et seconde électrodes 2 et 4. Les première et seconde électrodes 2 et 4 comportent respectivement des première et seconde couches actives 2a et 4a en contact avec la membrane solide 3 et éventuellement des première et seconde couches de diffusion 2b et 4b, comme représenté à la figure 2.

La membrane solide 3 conductrice d'ions hydroxydes est choisie parmi tout type de membrane solide connue pour être apte à conduire des ions hydroxydes. Elle a, de préférence, une conductivité ionique supérieure ou égale à 0,005 S/cm. A titre d'exemple, la membrane solide 3 peut être une membrane constituée d'un film de 50µm d'épaisseur en tétrafluoroéthylène (ETFE), greffé radiochimiquement par du chlorométhylstyrène, réticulé par du divinylbenzène puis aminé. Les collecteurs de courant sont constitués par tout type de matériau connu dans le domaine des piles à combustible alcalines.

Selon l'invention, les première et seconde couches actives 2a et 4a sont chacune constituées par un matériau comportant au moins un élément catalytique, un élément conducteur électronique et un élément conducteur d'ions hydroxydes. Les couches actives ainsi constituées forment alors des zones de point triple, c'est-à-dire des zones où se produisent à la fois une conduction ionique, une conduction électronique et une réaction catalytique, sans qu'il soit nécessaire d'ajouter un liquide alcalin dans la pile à combustible alcaline.

L'élément conducteur électronique est, de préférence, choisi parmi le groupe comprenant du carbone, du nickel, de l'argent, de l'or et du platine tandis que l'élément catalytique peut être en platine, en argent ou en tout autre type de matériau, de préférence non noble et connu pour agir comme catalyseur des réactions électrochimiques mises en jeu dans une pile de type AFC. Dans des modes particuliers de réalisation, l'élément catalytique peut être formé par l'élément conducteur électronique ou bien l'élément conducteur électronique est le support de l'élément catalytique et de l'élément conducteur d'ions hydroxydes et il est sous la forme d'un tissu, d'une mousse ou d'une poudre.

L'élément conducteur d'ions hydroxydes de la couche active de chaque électrode est un polymère à motif vinylaromatique comportant une fonction ammonium quaternaire et des contre-ions hydroxydes OH⁻ sont associés aux ammoniums quaternaires du polymère. Le polymère à motif vinylaromatique peut être un homopolymère formé à partir d'un seul monomère vinylaromatique ou bien un copolymère formé à partir d'un monomère vinylaromatique et d'au moins un autre monomère. Plus particulièrement, l'élément conducteur d'ions hydroxydes de la couche active est un polymère à motif styrénique comportant une fonction ammonium quaternaire et des contre-ions hydroxydes OH⁻ sont associés aux ammoniums quaternaires du polymère. On entend, par polymère à motif styrénique, une chaîne principale carbonée se répétant n fois et comportant au moins deux carbones reliés entre eux par une liaison covalente simple, une chaîne latérale comportant au moins un cycle aromatique étant rattachée à ladite chaîne principale carbonée. De plus, les contre-ions hydroxydes associés aux ammoniums quaternaires du polymère, permettent d'assurer la conduction ionique d'une électrode vers une seconde électrode à travers la membrane solide conductrice d'ions hydroxydes.

Selon un mode particulier de réalisation, l'élément conducteur d'ions hydroxydes est un polymère ayant la formule générale (I) suivante : 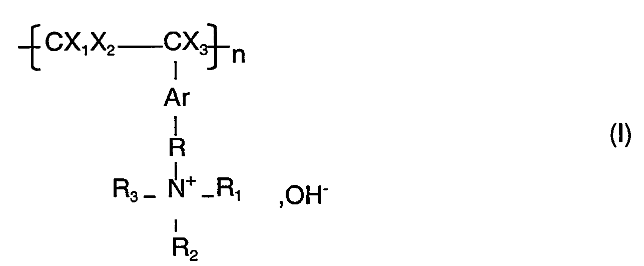 dans laquelle :
- X₁ et X₂ sont chacun choisis parmi le groupe comportant l'hydrogène, le chlore et le fluor tandis que X₃ est choisi parmi le groupe comportant l'hydrogène, le chlore, le fluor, un alkyle et un alkyle perfluoré,
- Ar représente un cycle aromatique carboné, éventuellement substitué,
- R est choisi parmi -CH₂- et -(CF₂)ₙ₁-CH₂-, avec n1 compris entre 1 et 10, le groupement alkyle -CH₂- de R étant relié par une liaison covalente simple à l'azote de l'ammonium quaternaire,
- R₁, R₂ et R₃ sont respectivement des groupements alkyles, aryles ou alkyles-aryles, identiques ou distincts,
- et n est un nombre entier.

Ainsi, dans chaque motif styrénique de la formule générale (I), la chaîne latérale, rattachée à la chaîne principale carbonée CX₁X₂-CX₃ par le cycle aromatique carboné Ar, comporte à son extrémité libre une fonction ammonium quaternaire "-N⁺R₁R₂R₃", un groupement R étant disposé entre le cycle aromatique carboné Ar et la fonction ammonium quaternaire.

Dans une variante de réalisation, l'élément conducteur d'ions hydroxydes peut également être un polymère ayant la formule générale (II) suivante:

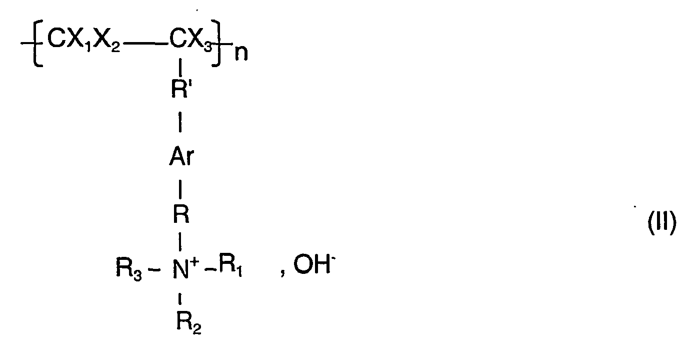

La formule générale (II) ne diffère de la formule générale (I) que par le fait qu'un groupe R' est disposé entre le groupe Ar et la chaîne principale -(CX₁X₂-CX₃)-, le groupe R' étant choisi parmi le groupe comprenant l'oxygène, le groupement -O-CF₂, et -(CF₂)ₙ₂- avec n2 compris entre 1 et 10.

La présence de l'élément conducteur d'ions hydroxydes dans la couche active de chaque électrode permet d'obtenir à la fois une conduction ionique, une conduction électronique et un effet catalytique au sein de la pile à combustible, la rendant ainsi insensible au phénomène de carbonatation. De plus, l'élément conducteur d'ions hydroxydes assure la continuité ionique entre la membrane solide et l'élément catalytique de chaque électrode et il permet la diffusion des combustibles vers l'élément catalytique.

A titre d'exemple, l'élément conducteur d'ions hydroxydes de la couche active de chaque électrode peut être le polymère de formule semi-développée suivante (III) :

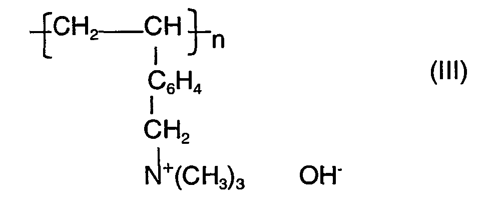

Le groupement -CH₂-N⁺(CH₃)₃ peut être indifféremment placé en position ortho, méta ou para sur chaque groupe aromatique -C₆H₄- du polymère.

Il est, de préférence, réalisé selon le schéma réactionnel suivant :

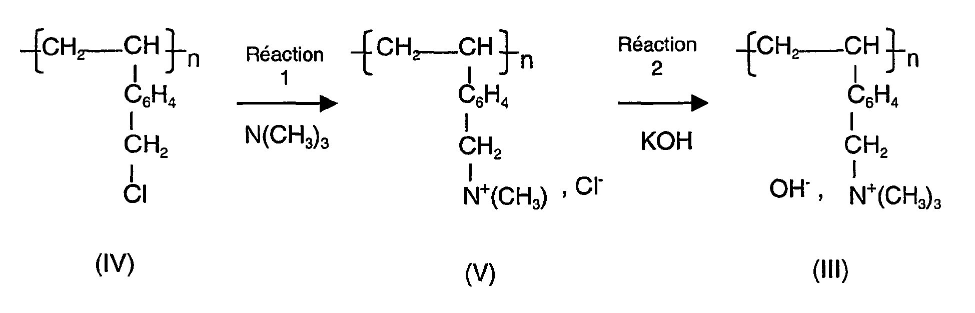

Ainsi, lors d'une première réaction (réaction 1), le composé de formule (V) est réalisé à partir de triméthylamine (N(CH₃)₃) et d'un précurseur soluble de formule semi-développée (IV) appelé polyvinylbenzochlorure (PVBC), de manière à remplacer l'atome de chlore du précurseur de formule semi-développée (IV) par la fonction ammonium quaternaire N⁺(CH₃)₃ et le contre-ion Cl⁻. Le contre-ion Cl⁻ du composé de formule semi-développée (V) est ensuite remplacé, lors de la réaction 2, par un ion hydroxyde OH⁻ de manière à former le composé de formule semi-développée (III) constituant l'élément conducteur d'ions hydroxydes de la couche active de chaque électrode.

Ainsi, à titre d'exemple, un premier procédé de fabrication de la couche active d'une électrode consiste à imprégner un élément catalytique sous forme solide par une solution comportant le précurseur soluble de formule semi-développée (IV). Durant cette étape, le précurseur de formule (IV) se dépose sur chaque grain de l'élément catalytique, puis l'ensemble réagit avec une triméthylamine pour former le composé de formule semi-développée (V), selon la réaction 1. Le composé de formule semi-développée (V), contenant la fonction ammonium quaternaire, subit ensuite un traitement dans une base selon la réaction 2, puis dans de l'eau distillée de manière à obtenir le composé de formule (III).

Dans un second procédé de fabrication de la couche active, l'élément catalytique sous forme de grains peut être dispersé dans un solvant. Une étape de mélange permet ensuite de mettre en contact l'élément catalytique et le précurseur soluble de formule (IV). Le précurseur soluble de formule (IV) est tout d'abord mis en solution dans un solvant identique à celui dans lequel a été dispersé l'élément catalytique. Au cours de l'étape de mélange, l'ensemble forme alors une dispersion dans laquelle le précurseur soluble de formule semi-développée (IV) se dépose sur chaque grain de l'élément catalytique. La dispersion est ensuite utilisée pour former la couche active, selon tout type de moyens connus pour réaliser des électrodes de piles à combustible. La couche active ainsi formée est immergée successivement dans une solution contenant du triméthylamine (réaction 1) puis dans une solution basique (réaction 2) et dans de l'eau distillée de manière à former l'élément conducteur d'ions hydroxydes ayant la formule semi-développée (III). Dans une variante de réalisation, la réaction 1 subit par le précurseur de formule (IV) peut être réalisée avant l'étape de mélange, de sorte que l'élément catalytique soit mis directement en contact avec le composé de formule (V).

Selon une autre variante de réalisation, l'élément catalytique associé au précurseur de formule (IV) peut être déposé sur la membrane solide, avant que les réactions 1 et 2 ne soient réalisées. La membrane sur laquelle est déposée l'élément catalyseur est alors appelée une membrane de type CCM ("Catalyst Coated Membrane). Il peut, également, être appliqué sur la couche de diffusion de l'électrode, qui est, par exemple, poreuse ou fibreuse et qui forme une électrode de type GDE ("Gaz Diffusion Electrode"). Le précurseur de formule (IV) peut également être réticulé au moyen de monoamines ou de diamines, de manière à former un liant réticulé.

Ainsi, la présence au sein de la couche active des électrodes d'un tel élément conducteur d'ions hydroxydes et d'une membrane solide échangeuse d'ions hydroxydes permet d'obtenir un ensemble électrode-membrane-électrode solide performant, sans ajout de liquide alcalin, évitant ainsi le phénomène de carbonatation. Ceci permet de réaliser une pile à combustible alcaline présentant de bonnes performances tout en étant insensible au phénomène de carbonatation lors d'un fonctionnement avec de l'air.

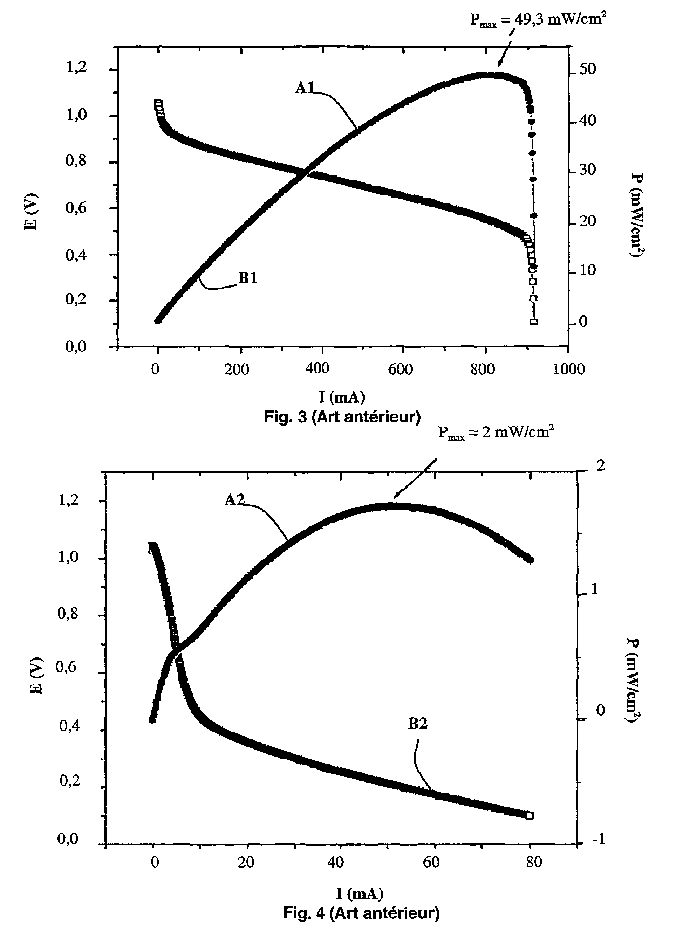

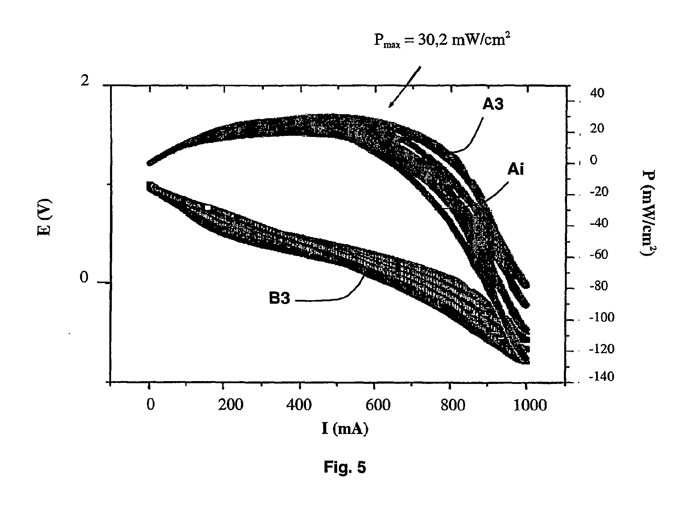

En effet, comme représenté aux figures 3 à 5, les performances électrochimiques d'une pile à combustible alcaline à électrolyte liquide selon l'art antérieur (figures 3 et 4), ont été comparées à celles d'une pile à combustible alcaline selon l'invention (figure 5). Les performances électrochimiques de chaque pile sont représentées par les courbes "A" et "B" représentant respectivement l'évolution de la tension E en fonction de l'intensité I et l'évolution de la puissance P en fonction de l'intensité I.

Ainsi, les courbes A1 et A2 de la pile à combustible alcaline selon l'art antérieur représentent l'évolution de la puissance électrochimique de la pile en fonction de l'intensité, respectivement lors de la mise en route de la pile et après 48 heures de fonctionnement. Les deux courbes A1 et A2 montrent que la puissance maximale obtenue passe de 50 mW/cm² à environ 2mW/cm² après 48 heures de fonctionnement, ce qui indique la présence d'une carbonatation de l'électrolyte alcalin. A la figure 5, l'ensemble des courbes A3 à Ai représente chacune la puissance en fonction de l'intensité pour différentes durées de fonctionnement de la pile à combustible alcaline. Les courbes A3 à A1 montrent que la puissance maximale de la pile à combustible alcaline selon l'invention reste stable dans le temps. La pile selon l'invention ne subit donc pas de phénomène de carbonatation au cours de son fonctionnement, contrairement à la pile à combustible alcaline selon l'art antérieur.

## Revendications

1. Pile à combustible alcaline comprenant un empilement solide constitué d'une première électrode (2), d'une membrane solide (3) conductrice d'ions hydroxydes et d'une seconde électrode (4), chaque électrode (2, 4) comportant une couche active (2a, 4a) en contact avec la membrane solide (3), pile (1) **caractérisée en ce que** le matériau constituant la couche active (2a, 4a) de chaque électrode (2a, 4) comporte au moins un élément catalytique, un élément conducteur électronique et un élément conducteur d'ions hydroxydes, l'élément conducteur d'ions hydroxydes étant un polymère à motif vinylaromatique comportant une fonction ammonium quaternaire et des contre-ions hydroxydes OH⁻ étant associés aux ammoniums quaternaires du polymère.

2. Pile selon la revendication 1, **caractérisé en ce que** l'élément conducteur d'ions hydroxydes est un polymère à motif styrénique comportant une fonction ammonium quaternaire et des contre-ions hydroxyde OH⁻ sont associés aux ammoniums quaternaires du polymère.

3. Pile selon la revendication 2, **caractérisé en ce que** l'élément conducteur d'ions hydroxydes est un polymère ayant la formule générale (I) suivante : 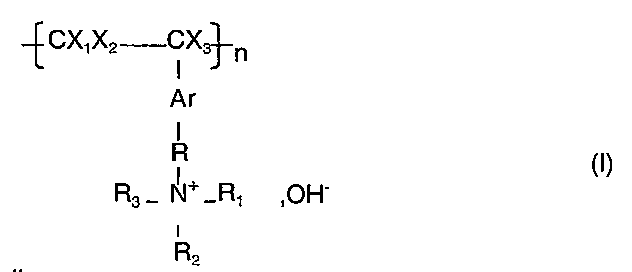 dans laquelle :
- X₁ et X₂ sont chacun choisis parmi le groupe comportant l'hydrogène, le chlore et le fluor,
- X₃ est choisi parmi le groupe comportant l'hydrogène, le chlore, le fluor et un alkyle ou un alkyle perfluoré,
- Ar représente un cycle aromatique carboné, éventuellement substitué,
- R est choisi parmi -CH₂ et -(CF₂)ₙ₁-CH₂-, avec n1 compris entre 1 et 10, le groupement alkyle -CH₂- de R étant relié par une liaison covalente simple à l'azote de l'ammonium quaternaire,
- R₁, R₂ et R₃ sont respectivement des groupements alkyles, aryles ou alkyles-aryles, identiques ou distincts,
- et n est un nombre entier.

4. Pile selon la revendication 2, **caractérisé en ce que** l'élément conducteur d'ions hydroxydes est un polymère de formule générale (II) suivante : 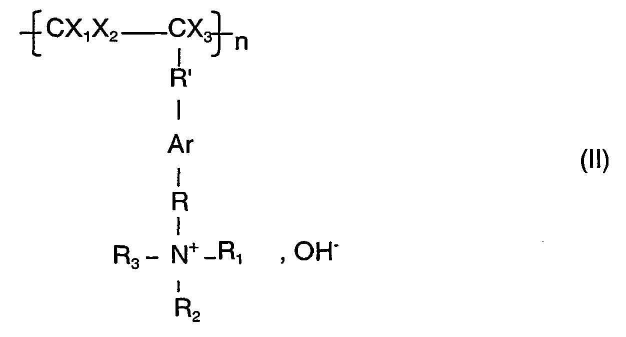 dans laquelle:
- X₁ et X₂ sont chacun choisis parmi le groupe comportant l'hydrogène, le chlore et le fluor,
- X₃ est choisi parmi le groupe comportant l'hydrogène, le chlore, le fluor, un alkyle et un alkyle perfluoré,
- Ar représente un cycle aromatique carboné, éventuellement substitué,
- R est choisi parmi -CH₂- ou-(CF₂)ₙ₁-CH₂- avec n1 compris entre 1 et 10, le groupement alkyle -CH₂- étant relié par une liaison covalente simple à l'azote de l'ammonium quaternaire,
- R' est choisi parmi le groupe comprenant l'oxygène, le groupement -O-CF₂, et -(CF₂)ₙ₂- avec n2 compris entre 1 et 10,
- R₁, R₂ et R₃ sont respectivement des groupements alkyles, aryles ou alkyles-aryles, identiques ou distincts,
- n est un nombre entier.

5. Pile selon l'une quelconque des revendications 1 à 4, **caractérisé en ce que** l'élément conducteur électronique est choisi parmi le groupe comprenant du carbone, du nickel, de l'argent, de l'or et du platine.

6. Pile selon l'une quelconque des revendications 1 à 5, **caractérisé en ce que** l'élément catalytique est choisi parmi le platine et l'argent.

7. Pile selon l'une quelconque des revendications 1 à 6, **caractérisé en ce que** l'élément catalytique est formé par l'élément conducteur électronique.

8. Pile selon l'une quelconque des revendications 1 à 7, **caractérisé en ce que** l'élément conducteur électronique étant le support de l'élément catalytique et de l'élément conducteur d'ions hydroxydes, il est sous la forme d'un tissu, d'une mousse, d'une poudre ou d'une grille.

9. Pile selon l'une quelconque des revendications 1 à 8, **caractérisée en ce que** la conductivité ionique de la membrane solide (3) conductrice d'ions hydroxydes est supérieure ou égale à 0,005 S/cm.

10. Pile selon l'une quelconque des revendications 1 à 9, **caractérisée en ce que** chaque électrode (2, 4) comporte une couche de diffusion (2b, 4b) de sorte que la couche active (2a, 4a) soit disposée entre la couche de diffusion (2a, 4b) et la membrane solide (3).

## Claims

1. Alkali fuel cell comprising a solid stack consisting of a first electrode (2), a solid membrane (3) conducting hydroxide ions and a second electrode (4), each electrode (2, 4) comprising an active layer (2a, 4a) that is in contact with the solid membrane (3), cell (1) **characterized in that** the material forming the active layer (2a, 4a) of each electrode (2, 4) comprises at least a catalytic element, an electronic conductive element and an element conducting hydroxide ions, the element conducting hydroxide ions being a polymer having vinylaromatic units comprising a quaternary ammonium function and hydroxide counter-ions OH⁻ being associated with the quaternary ammonium functions of the polymer.

2. Cell according to claim 1, **characterized in that** the element conducting hydroxide ions is a polymer having styrenic units comprising a quaternary ammonium function and hydroxide counter-ions OH⁻ are associated with the quaternary ammonium functions of the polymer.

3. Cell according to claim 2, **characterized in that** the element conducting hydroxide ions is a polymer having the following general formula (I); 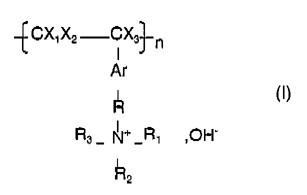 in which:
- X₁ and X₂ are both chosen from the group containing hydrogen, chlorine and fluorine,
- X₃ is chosen from the group containing hydrogen, chlorine, fluorine, an alkyl and a perfluorinated alkyl,
- Ar represents a possibly substituted, carbonated aromatic cycle,
- R is chosen from -CH₂- and -(CF₂)ₙ₁-CH₂-, with n1 comprised between 1 and 10, the -CH₂- alkyl group of R being bonded by a simple covalent bond to the nitrogen of the quaternary ammonium function,
- R₁, R₂ and R₃ are respectively identical or different alkyl, aryl or alkyl-aryl groups,
- and n is an integer.

4. Cell according to claim 2, **characterized in that** the element conducting hydroxide ions is a polymer having the following general formula (II): 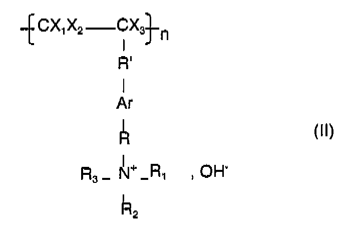 in which:
- X₁ and X₂ are both chosen from the group containing hydrogen, chlorine and fluorine,
- X₃ is chosen from the group containing hydrogen, chlorine, fluorine, an alkyl and a perfluorinated alkyl,
- Ar represents a possibly substituted, carbonated aromatic cycle,
- R is chosen from -CH₂- or -(CF₂)ₙ₁-CH₂- with n1 comprised between 1 and 10, the -CH₂- alkyl group being bonded by a simple covalent bond to the nitrogen of the quaternary ammonium function,
- R' Is chosen from the group comprising oxygen, the -O-CF₂ group, and -(CF₂)ₙ₂- with n2 comprised between 1 and 10,
- R₁, R₂ and R₃ are respectively identical or different alkyl, aryl or alkyl-aryl groups,
- n is an Integer.

5. Cell according to any one of claims 1 to 4, **characterized in that** the electronic conductive element is chosen from the group comprising carbon, nickel, sliver, gold and platinum.

6. Cell according to any one of claims 1 to 5, **characterized in that** the catalytic element is chosen from platinum and silver.

7. Cell according to any one of claims 1 to 6, **characterized in that** the catalytic element Is formed by the electronic conductive element.

8. Cell according to any one of claims 1 to 7, **characterized in that** the electronic conductive element being the support of the catalytic element and of the element conducting hydroxide ions, it is in the form of a fabric, a foam, a powder or a grid.

9. Cell according to any one of claims 1 to 8, **characterized in that** the ionic conductivity of the solid membrane (3) conducting hydroxide ions is greater than or equal to 0.005 S/cm.

10. Cell according to any one of claims 1 to 9, **characterized in that** each electrode (2, 4) comprises a diffusion layer (2b, 4b) so that the active layer (2a, 4a) is arranged between the diffusion layer (2b, 4b) and the solid membrane (3).

## Patentansprüche

1. Alkali-Brennstoffzelle, die eine feste Aufschichtung umfasst, die von einer ersten Elektrode (2), einer Hydroxidionen leitenden Feststoffmembran (3) und einer zweiten Elektrode (4) gebildet wird, wobei jede Elektrode (2, 4) eine aktive Schicht (2a, 4a) umfasst, die in Kontakt mit der Feststoffmembran (3) ist, Brennstoffzelle, **dadurch gekennzeichnet, dass** das Material, das die aktive Schicht (2a, 4a) jeder Elektrode (2, 4) bildet, mindestens ein katalytisches Element, ein leitendes elektronisches Element und ein Hydroxidionen leitendes Element umfasst, wobei das Hydroxidionen leitende Element ein Polymer mit eine Quaternärammoniumgruppe enthaltenden vinylaromatischen Einheiten ist, und OH⁻-Hydroxid-Gegenionen an die Quaternärammoniumgruppen des Polymers gebunden sind.

2. Brennstoffzelle nach Anspruch 1, **dadurch gekennzeichnet, dass** das Hydroxidionen leitende Element ein Polymer mit eine Quaternärammoniumgruppe enthaltenden Styren Einheiten ist, das eine Quaternärammoniumgruppe umfasst und dass die OH⁻-Hydroxid-Gegenionen an die Quaternärammoniumgruppen des Polymers gebunden sind.

3. Brennstoffzelle nach Anspruch 2, **dadurch gekennzeichnet, dass** das Hydroxidionen leitende Element ein Polymer mit folgender allgemeiner Formel (I) ist: 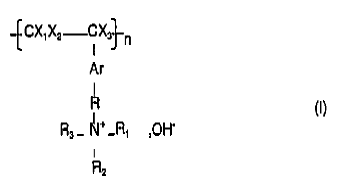 In der:
- X₁ und X₂ jeweils aus der Gruppe ausgewählt sind, die Wasserstoff, Chlor und Fluor umfasst,
- X₂ aus der Gruppe ausgewählt ist, die Wasserstoff, Chlor, Fluor und ein Alkyl oder ein perfluoriertes Alkyl umfasst,
- Ar einen kohlenstoffhaltigen aromatischen, eventuell substitulerten Zyklus darstellt,
- R aus -CH₂- und -(CF₂)ₙ₁-CH₂- ausgewählt ist, wobei n1 einen Wert von 1 bis 10 hat und die Alkylgruppe -CH₂- von R durch eine einfache kovalente Bindung an den Stickstoff des Quaternärammoniums gebunden ist,
- R₁, R₂ und R₃ jeweils identische oder unterschiedliche Alkyl-, Aryl- oder Alkyl-Arylgruppen sind,
- und n eine ganze Zahl ist.

4. Brennstoffzelle nach Anspruch 2, **dadurch gekennzeichnet, dass** das Hydroxidionen leitende Element ein Polymer mit folgender allgemeiner Formel (II) ist: 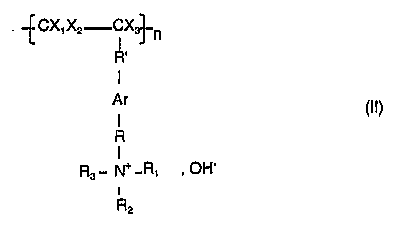 in der:
- X₁ und X₂ jeweils aus der Gruppe ausgewählt sind, die Wasserstoff, Chlor und Fluor umfasst,
- X₃ aus der Gruppe ausgewählt ist, die Wasserstoff, Chlor, Fluor und ein Alkyl oder ein perfluoriertes Alkyl umfasst,
- Ar einen kohlenstoffhaltigen aromatischen, eventuell substituierten Zyklus darstellt,
- R aus -CH₂- und -(CF₂)ₙ₁-CH₂- ausgewählt ist, wobei n₁ einen Wert von 1 bis 10 hat und die Alkylgruppe -CH₂- durch eine einfache kovalente Bindung an den Stickstoff des Quaternärammoniums gebunden ist,
- R' aus der Gruppe ausgewählt ist, die Sauerstoff, die -O-CF₂-Gruppe und -(CF₂)ₙ₂ umfasst, wobei n2 einen Wert von 1 bis 10 hat,
- R₁, R₂ und R₃ jeweils identische oder unterschiedliche Alkyl-, Aryl- oder Alkyl-Arylgruppen sind,
- n eine ganze Zahl ist.

5. Brennstoffzelle nach einem der Ansprüche 1 bis 4, **dadurch gekennzeichnet, dass** das leitende elektronische Element aus der Gruppe ausgewählt ist, die Kohlenstoff, Nickel, Silber, Gold und Platin umfasst.

6. Brennstoffzelle nach einem der Ansprüche 1 bis 5, **dadurch gekennzeichnet, dass** das katalytische Element aus Platin und Silber ausgewählt ist.

7. Brennstoffzelle nach einem der Ansprüche 1 bis 6, **dadurch gekennzeichnet, dass** das katalytische Element von dem leitenden elektronischen Element gebildet wird.

8. Brennstoffzelle nach einem der Ansprüche 1 bis 7, **dadurch gekennzeichnet, dass,** wenn das leitende elektronische Element das Substrat für das katalytische Element und das Hydroxidionen leitende Element ist, es in Form eines Gewebes, eines Schaums, eines Pulvers oder eines Gitters vorliegt.

9. Brennstoffzelle nach einem der Ansprüche 1 bis 8, **dadurch gekennzeichnet, dass** die lonenkonduktivität der Hydroxidionen leitenden Feststoffmembran (3) größer oder gleich 0,005 S/cm ist.

10. Brennstoffzelle nach einem der Ansprüche 1 bis 9, **dadurch gekennzeichnet, dass** jede Elektrode (2, 4) eine Diffusionsschicht (2b, 4b) umfasst, sodass die aktive Schicht (2a, 4a) zwischen der Diffusionsschicht (2a, 4b) und der Feststoffmembran (3) angeordnet ist.
